**Europäisches Patentamt**

**European Patent Office**

**Office européen des brevets**

(19)

(11) **EP 1 132 802 A1**

(12) **EUROPÄISCHE PATENTANMELDUNG**

(43) Veröffentlichungstag:
  **12.09.2001 Patentblatt 2001/37**

(51) Int Cl.⁷: **G06F 1/30**

(21) Anmeldenummer: **01101906.4**

(22) Anmeldetag: **27.01.2001**

(84) Benannte Vertragsstaaten:
  **AT BE CH CY DE DK ES FI FR GB GR IE IT LI LU MC NL PT SE TR**
  Benannte Erstreckungsstaaten:
  **AL LT LV MK RO SI**

(30) Priorität: **17.02.2000 AU 1755900**

(71) Anmelder: **ROBERT BOSCH GMBH**
  **70442 Stuttgart (DE)**

(72) Erfinder:
  • **Breunig, Volker**
    **71254 Ditzingen (DE)**

  • **Owerfeldt, Andre**
    **71706 Markgroeningen (DE)**
  • **Fenwick, Matt**
    **Glen Waverley, 3150 Victoria (AU)**
  • **Scarlata, Peter**
    **70839 Gerlingen (DE)**
  • **Casey, Simon Paul**
    **South Caulfield, 3162 Victoria (AU)**
  • **Robinson, Gregory James**
    **Carrum, 3197 Victoria (AU)**

(54) **Speisespannungsverstärker für Elektronikbaugruppen**

(57)    Ein elektronisches Steuersystem umfaßt einen Mikroprozessor; und einen Verstärkerkreis zur Erhöhung der Speisespannung für den Mikroprozessor; gekennzeichnet dadurch, daß der Mikroprozessor ein Verstärker-Steuersignal zur Steuerung des Verstärkerkreises erzeugt.

FIGURE 2B

EP 1 132 802 A1

## Beschreibung

Die vorliegende Erfindung bezieht sich auf einen Speisespannungsverstärker für eine Elektronikbaugruppe. Insbesondere bezieht sich die Erfindung auf einen Verstärkerkreis zur Aufrechterhaltung einer Betriebsspannung der Elektronikbaugruppe während einer Niederspannungsperiode.

In Automobilanwendungen kommt es zu gewissen Zeiten vor, daß einem Mikroprozessor eines Fahrzeug-Computers nicht die für normalen Betrieb erforderliche Mindestspannung zugeführt wird, zum Beispiel während der Startimpulse. Da es wichtig ist, daß der Mikroprozessor während dieser Zeiten funktionsfähig bleibt, sind Versuche gemacht worden, dieses Problem zu beseitigen, wobei die am häufigsten angewandte Lösung die ist, einen Speicherkondensator einzusetzen, welcher das erforderliche Spannungspotential in Abwesenheit des normalen Spannungspotentials liefert. Leider kann jedoch der Speicherkondensator im allgemeinen den Spannungspegel für die erforderliche Zeit nicht aufrechterhalten. Es soll hiermit ein System vorgeschlagen werden, welches diese Schwierigkeit beseitigt und welches die Kosteneinschränkungen, die mit Fahrzeugteilen verbunden sind, berücksichtigt, oder welches zumindest ein System vorschlägt, welches eine zweckmäßige Alternative bietet.

Die vorliegende Erfindung schlägt ein elektronisches Steuersystem vor, welches folgende umfaßt:

einen Mikroprozessor; und
einen Verstärkerkreis zur Erhöhung der Speisespannung für den Mikroprozessor;
gekennzeichnet dadurch, daß der Mikroprozessor ein Verstärker-Steuersignal
zur Steuerung des Verstärkerkreises erzeugt.

Bevorzugterweise ist das Steuersignal ein PDM-Signal (Impulsdauer-Modulationssignal) Bevorzugterweise ist der Arbeitszyklus des PDM-Signals verstellbar gemäß einer vorgegebenen verhältnismäßigen Aufgliederung (relational mapping) zum Ansprechen auf einen geprüften Pegel des abgetasteten Speisespannungspegel. Bevorzugterweise wird der geprüfte Pegel des abgetasteten Speisespannungspegels mittels einer Analog-Digital-Wandler-Schaltung des Mikroprozessors geprüft.

Bevorzugterweise schließt das System eine Schutzisolierung ein, welche zwischen den Mikroprozessor und den Verstärkerkreis geschaltet wird zur Bereitstellung eines gewissen Maßes an elektrischer Isolierung zwischen dem Verstärkerkreis und dem Mikroprozessor im Falle einer Fehlfunktion des Mikroprozessors. Bevorzugterweise umfaßt die Schutzisolierung eine Hochpaß-RC-Filterschaltung mit einer Abschneidefrequenz von ca. 500 Hertz.

Bevorzugterweise umfaßt der Verstärkerkreis einen Feldeffekttransistor (FET), dessen Tor auf das PDM-Signal seitens des Mikroprozessors anspricht, einen Induktor und ein Kondensatorelement zur Bereitstellung der Verstärkungsspannung, wenn der FET durch das PDM-Signal angeschaltet wird. Bevorzugterweise wird das PDM-Signal von dem Mikroprozessor modifiziert, um Überschwingen der Verstärkungsspannung zu verhindern. Bevorzugterweise wird die Modifizierung durch eine Rückführungsschleife erzielt.

Vorteilhafterweise stellen Ausführungen der Erfindung eine Verstärkungsspannung für den Mikroprozessor bereit, damit der Mikroprozessor weiterhin in Betrieb bleibt, auch wenn die Speisespannung nicht ausreicht. Des weiteren ermöglicht die Erfindung dem Mikroprozessor die Durchführung von Back-up Aufgaben, wenn er feststellt, daß die Batterie zur Neige geht. Zum Beispiel kann der Mikroprozessor die Übertragung eines Alarmsignals veranlassen oder kann wichtige Informationen in einem nichtflüchtigen Speicher sichern, bevor die Batterie erschöpft ist.

Bevorzugte Realisierungen der Erfindung sind anschließend mit Bezug auf die beiliegenden Zeichnungen näher beschrieben, wobei die Beispiele in keiner Weise den Umfang der Erfindung einschränken.

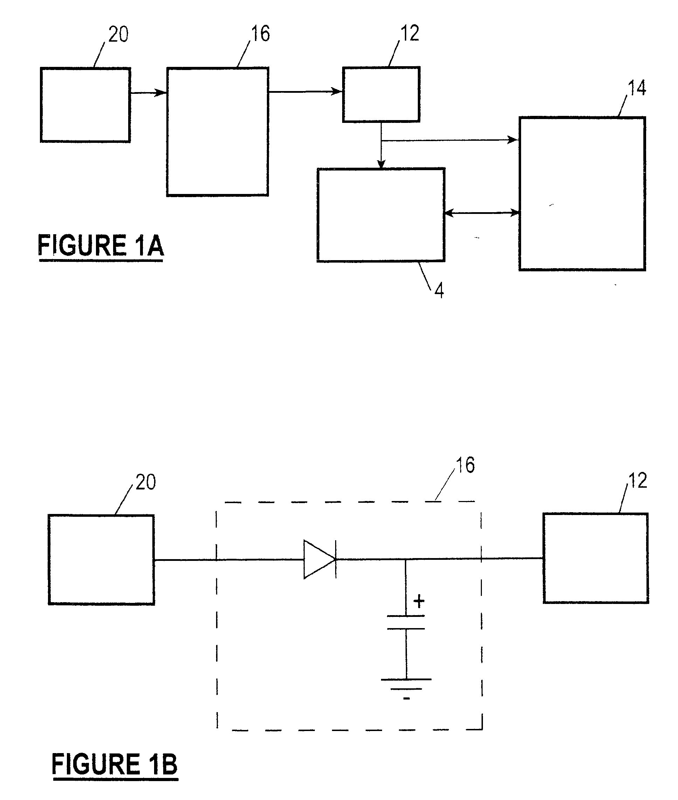

Figur 1 a zeigt ein elektronisches Steuersystem mit einer traditionellen Schutzisolierung;
Figur 1 b zeigt die traditionelle Schutzisolierung in Figur 1 a im Detail;
Figuren 2 a und 2 b zeigen ein elektronisches Steuersystem einer erfindungsgemäßen Realisierung einschließlich eines Spannungsverstärker-Teilsystems;
Figur 3 zeigt eine graphische Darstellung der Speisespannung für den Mikroprozessor während einer Zündperiode des Fahrzeugs;
Figur 4 zeigt ein Beispiel einer Kurve des erwünschten PDM-Arbeitszyklus gegenüber der geprüften, abgetasteten Speisespannung.
Figur 5 ist ein Ablaufschema, welches einen Spannungsverstärker-Vorgang gernäß einer Realisierung der Erfindung zeigt; und
Figur 6 zeigt eine alternative Schaltung zur Verwendung in dem elektronischen Steuersystem gemäß Figuren 2a und 2b.

Mit Bezug auf Figuren 1a und 1b enthält ein traditionelles elektronisches Steuersystem eines Fahrzeugs, z. B. ein Auto, einen Mikroprozessor 4, welcher eine Speisespannung von der Eingangsspannungszuleitung 20 über eine Schutzisolierungs-Teilschaltung 16 und einen Spannungsregler 12 empfängt.

Der Mikroprozessor 4 ist mit peripheren Teilen 14 zusammengeschaltet, welche auch eine Speisespannung durch den Spannungsregler 12 erhalten. Die Schutzisolierungs-Teilschaltung 16 schließt eine Diode und einen Kondensator wie in Figur 1b gezeigt, ein.

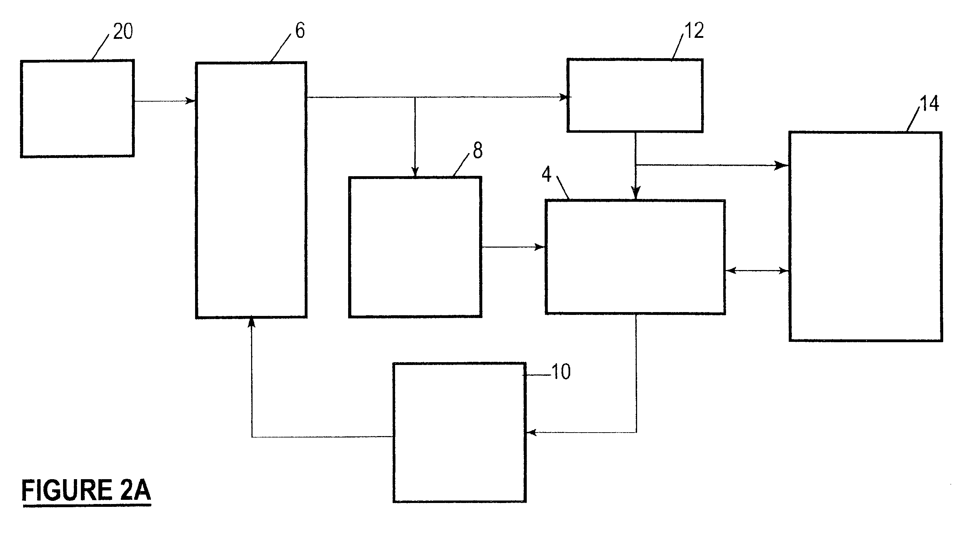

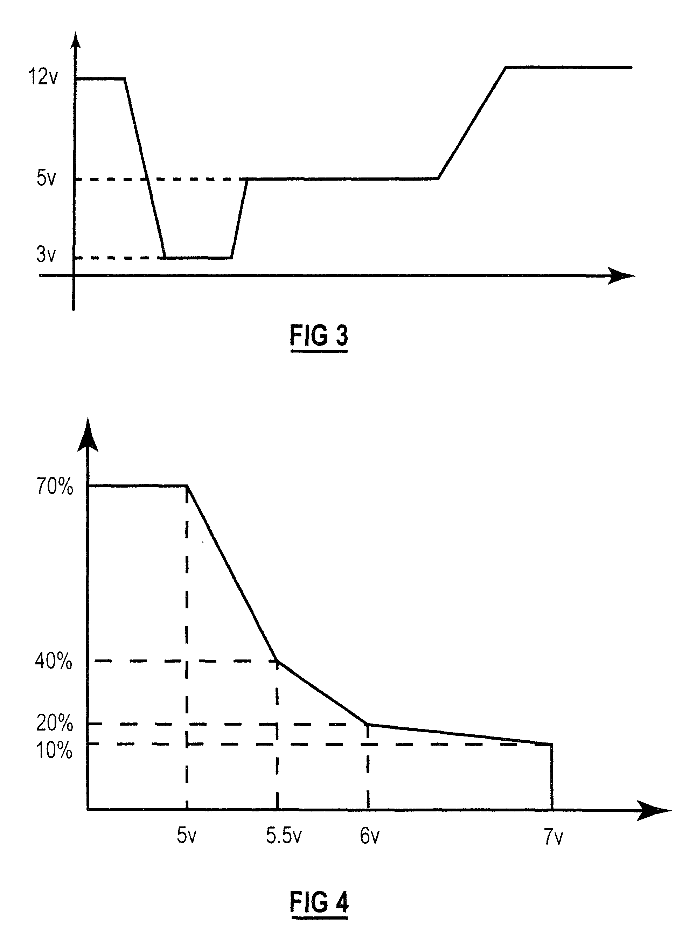

Mit Bezug auf Figur 2a ersetzt hier die bevorzugte Realisierung der Erfindung die Schutzisolierungs-Teilschaltung 16 des traditionellen Fahrzeugsystern mit einem Verstärker- Teilsystem 6, einem Spannungsabtaster-Teilsystem 8 und eine Verstärker-Teilsystem-Trennschaltung 10 (Boost subsystem isolation circuit 10), die so angeordnet ist, damit der Mikroprozessor 4 Feedback-Regelung über das Verstärker- Teilsystem 6 ausüben kann. Das Verstärker- Teilsystem 6 ermöglicht, daß dem Mikroprozessor 4 eine Verstärkungsspannung zugeführt werden kann, im Falle daß die Eingangsspannungszuleitung 20 einen unzureichenden Speisepegel erzeugt, um den Mikroprozessor in angeschaltetem Zustand zu erhalten. Falls zum Beispiel die Eingangsspannung auf einen Pegel von 3 Volt reduziert wird, wie es während der Zündperiode vorkommen kann, wenn die Startimpulse dem Startermotor eines Fahrzeugs zugeführt werden, ermittelt der Mikroprozessor 4 den niedrigen Spannungspegel durch das Spannungsabtaster-Teilsystem 8 und sendet ein Verstärkungssignal an das Verstärker-Teilsystem 6, die Speisespannung an den Mikroprozessor 4 zu erhöhen. Figur 3 zeigt eine graphische Darstellung der Speisespannung für den Mikroprozessor während der Zündperiode des Fahrzeug, wenn keine Verstärkungsspannung benutzt wird.

Ein Beispiel eines Mikroprozessors, welches sich eignen würde, ist ein Motorola Chip mit einem PDM-Ausgang und einem Analog-Digital-Eingang. Motorola Chips der z.B. MC68HC908, MC68HC08 oder MC68HC12-Bereiche würden sich eignen. Üblicherweise würde ein solcher Mikroprozessor nicht mit einer Spannungszufuhr von nur 3 Volt in Betrieb gehalten werden und eine Verstärkungsspannung wäre daher erforderlich, um den Mikroprozessor im Betriebszustand zu halten.

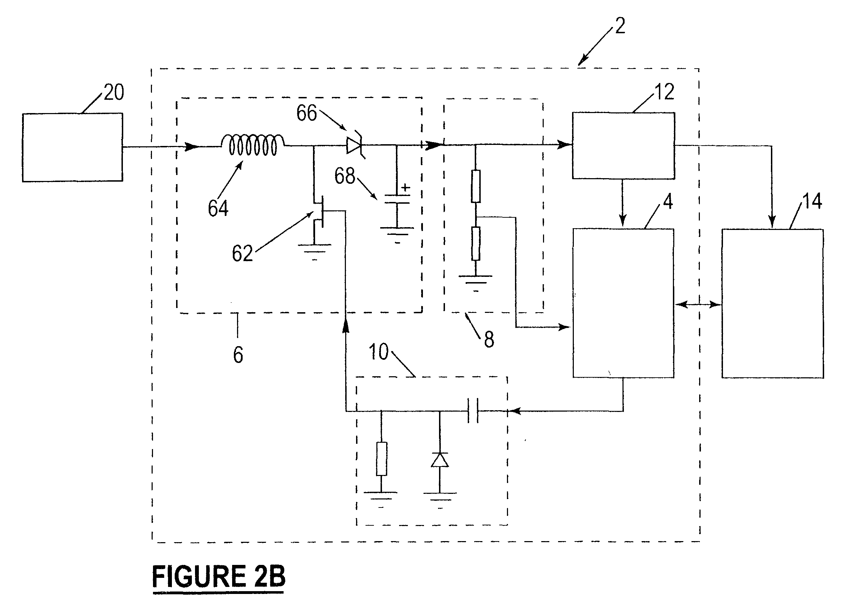

Wie in Figur 2b gezeigt, umfaßt das Verstärker-Teilssystem 6 einen Feldeffekttransistor (FET) 62, dessen Tor einen Sollwert (control input) von dem Mikroprozessor 4 über die Verstärker-Teilsystem-Trennschaltung 10 empfängt. Das Verstärker-Teilsystem 6 umfaßt auch einen Induktor 64, eine Schottky Diode 66 und einen Kondensator 68. Wenn die Speisespannung für den Mikroprozessor 4 ausreichend ist, bleibt der FET 62 abgeschaltet. Wenn der Mikroprozessor 4 über das Spannungsabtaster-Teilsystem 8 ermittelt, daß die Speisespannung unter den erforderlichen Pegel gesunken ist (was von dem Mikroprozessorchip in der jeweiligen Anwendung abhängig ist), sendet der Mikroprozessor 4 ein PDM- Signal um den FET 62 periodisch anzuschalten und dabei Energie in dem Induktor 64 zu speichern, wenn das PDM Signal hoch ist. Wenn das PDM Signal niedrig ist, lädt die in dem Induktor 64 gespeicherte Energie den Kondensator 68 über die Schottky Diode 66 auf. Dies verstärkt die Aufladung in dem Kondensator 68 und erhöht dadurch die Spannungszufuhr zu dem Spannungsregler 12. Die Schottky Diode 66 isoliert den Kondensator 68 von dem FET 62, wenn das PDM-Signal hoch ist.

Das Spannungsabtaster-Teilsystem 8 ist ein einfacher Spannungsteilerkreis mit zwei Widerständen, und die Ausgabe des Teilsystems 8 wird in einen Analog-Digital- Wandler-Eingabe-Kreis (conversion input circuit) des Mikroprozessors 4 gespeist. Der Mikroprozessor 4 arbeitet vorzugsweise bei einer Frequenz von mehr als 20 kHz und die Abtastfrequenz des Spannungsabtaster-Teilsystems 8 sollte entsprechend synchronisiert werden, um eine verzögerungsfreie genaue Anzeige des Spannungseingangs in den Spannungsregler 12 zu erzielen.

Im Falle, daß der Mikroprozessor 4 versagen sollte und die Ausgabe an das Verstärker-Teilsystem 6 "high" (hoch) versagt, dann würde die Verstärker-Teilsystem-Trennschaltung 10 als ein RC-Filter aktiv werden, um die Signale unter einen gewissen Grenzwert abzuschwächen, z.B. 500 Hertz, und dadurch das Verstärker-Teilsystem 6 zu schützen.

Auf diese Weise wird die Verstärker-Teilsystem-Trennschaltung 10 als ein Hochpaßfilter aktiv, um ein von dem Mikroprozessor ausgehendes "fail high" Gleichstromsignal zu blockieren.

In der bevorzugten Realisierung gibt der Mikroprozessor 4 ein PDM-Signal an das Verstärker-Teilsystem 6 ab, um den FET 62 gemäß einem vorgegeben PDM-Arbeitszyklus an- und abzuschalten, um die Aufladung des Kondensators 68 zu verstärken, während dem Spannungsregler 12 eine höhere mittelnde Spannung zugeführt wird. Das PDM-Signal kann von dem Mikroprozessor selbstanpassend geregelt werden, um den Arbeitszyklus ansprechend auf die geprüfte Spannungszufuhr von dem Spannungsabtaster-Teilsystem 8 zu modifizieren. Figur 4 zeigt eine Kurve des erwünschten PDM-Arbeitszyklus entsprechend dem Spannungseingang an dem Spannungsregler 12. Zum Beispiel, falls der Spannungseingangspegel der Eingangsspannungszuleitung 20 über eine bestimmte Zeitspanne ständig fällt, kann der Arbeitszyklus des PDM-Signals von ungefähr 10 % auf 70 % erhöht werden. Des weiteren, um das Überschwingen der dem Spannungsregler 12 zugeführten Spannung während des 'ON'-Zyklus (angeschalteter Zyklus) des PDM-Signals zu verhindern (d.h. wenn der FET 62 angeschaltet ist), wird die Erhöhung des PDM-Arbeitszyklus von einer Regelkreis-Feedback-Funktion innerhalb des Mikroprozessors 4 geregelt. Zum Beispiel, wenn der Mikroprozessor 4 einen geprüften Spannungspegel seitens des Spannungsabtaster-Teilsystems 8 empfängt, wird dieser bei der erwünschten PDM-Kurve (wie in Figur 4 gezeigt) eingesetzt, um den erwünschten PDM-Arbeitszyklus-Pegel zu erzielen. Der neue PDM-Arbeitszyklus-Pegel wird dann (zum Beispiel) so errechnet:

Neuer PMD-Arbeitszyklus =(0,1 x der erwünschte PDM-Arbeitszyklus) + (0,9 x

der vorangegangene PDM-Arbeitszyklus-Pegel)

Das Verhältnis des Feedback-Regelkreises ist nur ein Beispiel und es sollte zur Kenntnis genommen werden, daß unterschiedliche Verhältnisse von Regelkreisen geeignet sein mögen.

Alternativ kann der PDM-Arbeitszyklus festgesetzt werden, z.B. bei 70%, und der Mikroprozessor 4 schaltet den PDM-Regler zu dem Verstärker-Teilsystem 8 nur an und ab, ohne die oben beschriebene selbstanpassende Feedback-Regelung auszuüben. Als eine weitere, weniger bevorzugte Alternative kann der Mikroprozessor 4 ein PDM-Signal des festgesetzten Arbeitszyklus ausgeben, welcher angeschaltet bleibt, während der Eingangsspannungspegel unter dem erforderlichen Spannungszufuhrpegel-Grenzwert liegt.

Ein weiteres Merkmal der bevorzugten Realisierung der Erfindung ist, daß das Verstärker-Teilsystem 6 wahlweise nur für die ungefähre Dauer der Zündsequenz des Fahrzeugs freigegeben wird, (d.h. während der Periode reduzierter Eingangsspannungszufuhr zu dem Mikroprozessor 4 entsprechend den Startimpulsen.) Sobald der Mikroprozessor 4 die angemessene Eingabe seitens des peripheren Teils 14 empfängt, wodurch angezeigt wird, daß die Startimpulse kurz bevorstehen, kann der Mikroprozessor 4 das Eingangssignal an das Verstärker-Teilsystem 6 freigeben. Vorteilhafterweise stellt dies ein stromsparendes Merkmal bereit, und zwar durch Einsparung von Mikroprozessor-Ressourcen und Abschalten der PDM-Ausgabe von dem Mikroprocessor 4.

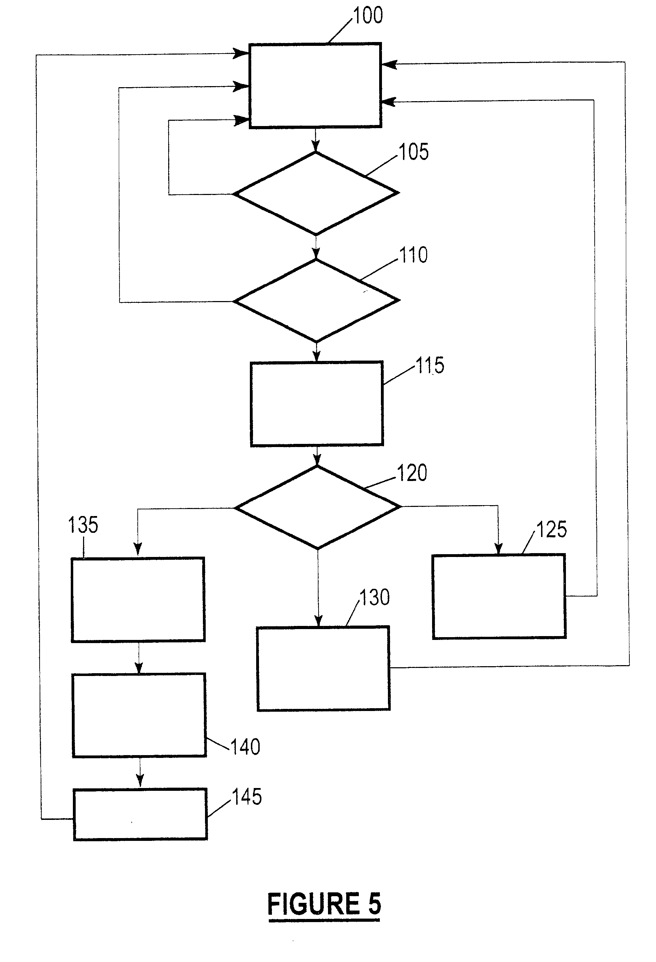

In Bezug auf die Figur 5, kann der Mikroprozessor 4 ein Hauptsystemprogramm 100 verfolgen, und zwar durch Durchführung der angemessenen Verstärkungsregelung der Speisespannung. Bei Stufe 105, wenn es an der Zeit ist, den Eingangsspannungspegel zu prüfen, prüft der Mikroprozessor 4 bei Stufe 110, ob ein Grund vorliegt, warum das Verstärker-Teilsystem nicht freigegeben werden sollte (zum Beispiel, falls der Startzyklus nicht aktiviert worden ist). Falls der Mikroprozessor 4 das Verstärker-Teilsystem 6 bei Stufe 110 freigibt, wird die Reglereingangsspannung bei Stufe 115 abgetastet. Der Analog-Digital Umsetzer-Eingang des Mikroprozessors 4 setzt die abgetastete Eingangsspannung auf einen 8-bit Binärwert und der Mikroprozessor 4 stellt einen Vergleich bei Stufe 120 an, um zu ermitteln, welcher PDM-Arbeitszyklus zur Regelung des Verstärker-Teilsystems angemessen ist. Falls der Eingangsspannungspegel tatsächlich angemessen ist, wird bei Stufe 125 das PDM-Signal abgeschaltet, damit die dem Spannungsregler 12 zugeführte Spannung nicht unnötig erhöht wird, und der Mikroprozessor 4 kehrt zu dem Hauptsystemprogramm zurück (Stufe 100) um den Eingangsspannungspegel weiterhin zu überwachen. Falls die abgetastete Eingangsspannung zu dem Spannungsregler 12 auf einem kritisch niedrigen Pegel ist, wird bei Stufe 130 das maximale PDM-Verstärkungssignal an das Verstärker-Teilsystem 6 von dem Mikroprozessor 4 abgegeben. Falls die dem Spannungsregler 12 zugeführte Eingangsspannung auf niedrigem, aber nicht kritischem, Pegel ist, wird der angemessene PDM-Arbeitszyklus bei Stufe 135 errechnet, und falls es erwünscht ist, ein Überschwingen der Verstärkungspannung zu verhindern, wird ein neuer PDM-Arbeitszyklus bei Stufe 140 in der oben beschriebenen Weise durch selbstanpassenden Regelkreis errechnet. Falls die Überschwingkontrolle nicht freigegeben ist, folgt Stufe 145 sofort auf Stufe 135. Bei Stufe 145 wird das angemessene PDM-Verstärkersignal dem Verstärker-Teilsystem 6 zugeführt. Die in Figur 5 gezeigte Vorgehensweise ist eine stufenweise Methode und sollte für jede abgetastete Spannung, die von dem Analog-Digital-Wandler-Schaltung des Mikroprozessors gelesen wird, befolgt werden, um die Verstärkerspannung auf dem erforderlichen Pegel über die erforderliche Zeitspanne hinweg aufrechtzuerhalten.

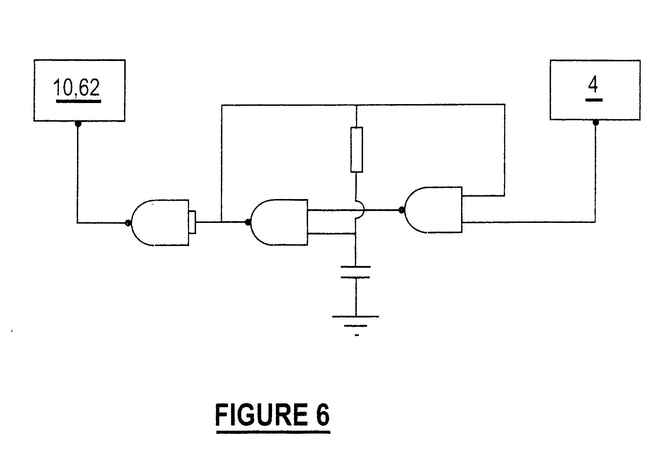

In einer alternativen Realisierung der Erfindung kann eine Oszillatorschaltung zwischen die Verstärker-Teilsystem-Trennschaltung 10 und den Mikroprozessor 4 geschaltet werden (oder kann die Verstärker-Teilsystem-Trennschaltung 10 ersetzen) wie in Figur 6 gezeigt. Der Oszillator wird nur auf ein 'ON'-Signal (angeschaltet) seitens des Mikroprozessors aktiv und erfordert keine spezifische PDM-Ausgabe. Die Oszillatorschaltung ist eine bekannte Schaltung, die Schmitt-Trigger NAND-Tore und eine RC-Beschaltung (zur Bereitstellung der Rückmeldungsverzögerung) verwendet und dient einfach der Bereitstellung eines oszillierenden ON/OFF Signals (AN/AUS) an den FET 62 bei einer Frequenz, die von der Zeitkonstanten der RC-Beschaltung ermittelt wird. In diesem Fall wird die RC-Beschaltung so eingestellt, daß sie eine Ausgabe von 30 kHz an den FET 62 bereitstellt. Diese Frequenzhöhe kann, wenn erwünscht, geändert werden, indem die Zeitkonstante der RC-Beschaltung geändert wird.

Es wird dem Fachkundigen gegenwärtig sein, daß Änderungen und Abweichungen von einigen Merkmalen der beschriebenen Realisierungen der Erfindung möglich sind, ohne von dem Inhalt oder Umfang der beschriebenen Erfindung abzuweichen.

**Patentansprüche**

**1.** Ein elektronisches Steuersystem umfaßt:

einen Mikroprozessor; und

einen Verstärkerkreis zur Erhöhung der Speisespannung für den Mikroprozessor; gekennzeichnet dadurch, daß der Mikroprozessor ein Verstärker-Steuersignal zur Steuerung des Verstärkerkreises erzeugt.

**2.** Das System nach Anspruch 1, weiter **dadurch gekennzeichnet, daß** der Mikroprozessor ein Abtastsignal empfängt, welches für die Speisespannung repräsentativ ist, und das Verstärker-Steuersignal ansprechend darauf anpaßt.

**3.** Das System nach Anspruch 2, weiter **dadurch gekennzeichnet, daß** das Abtastsignal einen abgetasteten Pegel der Speisespannung darstellt.

**4.** Das System nach Anspruch 1, 2 oder 3, weiter **dadurch gekennzeichnet, daß** das Verstärker-Steuersignal ein PDM-Signal (Impulsdauer-Modulationssignal) ist.

**5.** Das System nach Anspruch 4, weiter **dadurch gekennzeichnet, daß** der Arbeitszyklus des PDM-Signals ansprechend auf den abgetasteten Pegel periodisch angepaßt wird.

**6.** Das System nach Anspruch 5, weiter **dadurch gekennzeichnet, daß** das PDM-Signal gemäß einem vorgegebenen PDM-Arbeitszyklus und einer abgetasteten Pegelkurve angepaßt wird.

**7.** Das System nach Anspruch 6, weiter **dadurch gekennzeichnet, daß** das PDM-Signal durch den Mikroprozessor modifiziert wird, um ein Überschwingen der Speisespannung zu verhindern.

**8.** Das System nach Anspruch 7, weiter **dadurch gekennzeichnet, daß** die Modifizierung durch einen Feedback-Regelkreis bewirkt wird, welche den PDM-Arbeitszyklus für eine Periode anpaßt, gestützt auf den PDM-Arbeitszyklus für die vorangegangene Periode.

**9.** Das System nach Anspruch 4, weiter **dadurch gekennzeichnet, daß** der Arbeitszyklus des PDM-Signals festgesetzt ist.

**10.** Das System nach Anspruch 9, weiter **dadurch gekennzeichnet, daß** das PDM-Signal ansprechend auf den abgetasteten Pegel an- oder abgeschaltet wird.

**11.** Das System nach Anspruch 9, weiter **dadurch gekennzeichnet, daß** das PDM-Signal angeschaltet bleibt, wenn der Verstärkerkreis freigegeben ist.

**12.** Das System nach Anspruch 1, weiter **dadurch gekennzeichnet, daß** das System eine Schutzisolierung aufweist, die zwischen den Mikroprozessor und den Verstärkerkreis geschaltet ist, zur Bereitstellung eines gewissen Maßes an elektrischer Isolierung des Verstärkerkreises gegenüber dem Mikroprozessor.

**13.** Das System nach Anspruch 9, weiter **dadurch gekennzeichnet, daß** die Schutzisolierung eine Hochpaß-RC-Filterschaltung mit einer Abschneidefrequenz von ca. 500 Hertz einschließt.

**14.** Das System nach Anspruch 4, weiter **dadurch gekennzeichnet, daß** eine Spannungsabtasterschaltung zur Bereitstellung des Abtastsignals für den Mikroprozessor eingeschlossen ist.

**15.** Das System nach Anspruch 4, weiter **dadurch gekennzeichnet, daß** der Verstärkerkreis einen mit einem Schalter verbundenen Induktor umfaßt, der von dem PDM-Signal geschaltet wird, und ein Kondensatorelement, das über den Schalter und in Serie mit dem Induktor geschaltet ist, zur Speicherung der Aufladung zur Verstärkung der Speisespannung.

**16.** Das System nach Anspruch 4, weiter **dadurch gekennzeichnet, daß** ein Spannungsregler eingeschlossen ist, welcher die Speisespannung für den Mikroprozessor empfängt und regelt.

**17.** Das System nach Anspruch 1, weiter **dadurch gekennzeichnet, daß** das Verstärker-Steuersignal von dem Mikroprozessor durch eine Oszillator-Schaltung bereitgestellt wird, zwischen dem Verstärkerkreis und dem Mikroprozessor geschaltet, zur Modulierung der Verstärkung der Speisespannung für den Mikroprozessor.

**18.** Das System nach Anspruch 1 oder 17, weiter **dadurch gekennzeichnet, daß** das Verstärker-Steuersignal eine festgesetzte Frequenz hat.

**19.** Das System nach Anspruch 18, weiter **dadurch gekennzeichnet, daß** die festgesetzte Frequenz über ungefähr 30 kHz liegt.

**20.** Das System nach Anspruch 1, weiter **dadurch gekennzeichnet, daß** der Verstärkerkreis durch den Mikroprozessor im wesentlichen für die Dauer eines Startsignals freigegeben ist, welches von einem das System enthaltenden Fahrzeug erzeugt wird.

**21.** Das System nach Anspruch 2, weiter **dadurch gekennzeichnet, daß** der Mikroprozessor das Verstärker-Signal erzeugt, wenn ein Prüfstift des Mikroprozessors von dem Abtastsignal getriggert wird.

**22.** Das System nach Anspruch 21, weiter **dadurch gekennzeichnet, daß** der Verstärkerkreis einen von dem Verstärkersignal gesteuerten Oszillator umfaßt.

**23.** Ein Fahrzeug einschließlich eines Steuersystems nach einem der Ansprüche 1-22.

## FIGURE 1A

## FIGURE 1B

FIGURE 2A

EP 1 132 802 A1

**FIGURE 2B**

EP 1 132 802 A1

FIG 3

FIG 4

**FIGURE 5**

**FIGURE 6**

**Europäisches Patentamt**

# EUROPÄISCHER RECHERCHENBERICHT

Nummer der Anmeldung

EP 01 10 1906

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | B.D. MOORE: "Step-up/step-down converters power small portable systems" EDN ELECTRICAL DESIGN NEWS., Bd. 39, Nr. 3, 3. Februar 1994 (1994-02-03), Seiten 79-84, XP000440998 NEWTON, MA, US ISSN: 0012-7515 * Seite 80; Abbildung 2 * | 1,4 | G06F1/30 |
| A | WO 00 00835 A (KONINKLIJKE PHILIPS ELECTRONICS N.V.) 6. Januar 2000 (2000-01-06) * Seite 8, Zeile 10 - Seite 10, Zeile 3; Abbildung 1 * | 1-3,14 | |
| A | US 5 636 109 A (CARROLL) 3. Juni 1997 (1997-06-03) * Spalte 6, Zeile 3 - Spalte 8, Zeile 63; Abbildung 1 * | 1,12 | |
| A | DE 40 17 415 A (KOITO MFG. CO. LTD.) 14. Februar 1991 (1991-02-14) * Spalte 6, Zeile 23 - Zeile 49; Abbildungen 2,4,5 * * Spalte 4, Zeile 36 - Spalte 5, Zeile 35 * | 1-5,7, 15-17 | **RECHERCHIERTE SACHGEBIETE (Int.Cl.7)** G06F H02M |
| A | US 5 959 439 A (SHENAI ET AL.) 28. September 1999 (1999-09-28) * Spalte 2, Zeile 57 - Spalte 3, Zeile 56; Abbildung 1 * | 1-3,17 | |

-/--

Der vorliegende Recherchenbericht wurde für alle Patentansprüche erstellt

| Recherchenort | Abschlußdatum der Recherche | Prüfer |
|---|---|---|
| BERLIN | 23. Mai 2001 | Taylor, P |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.....................................................
& : Mitglied der gleichen Patentfamilie, übereinstimmendes Dokument

EPO FORM 1503 03.82 (P04C03)

**Europäisches Patentamt**

**EUROPÄISCHER RECHERCHENBERICHT**

Nummer der Anmeldung

EP 01 10 1906

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | US 5 355 077 A (KATES) 11. Oktober 1994 (1994-10-11) * Spalte 6, Zeile 41 - Spalte 7, Zeile 33; Abbildungen 3A,4 * * Spalte 4, Zeile 34 - Spalte 5, Zeile 28 * ----- | 1 | |
| | | | RECHERCHIERTE SACHGEBIETE (Int.Cl.7) |

Der vorliegende Recherchenbericht wurde für alle Patentansprüche erstellt

| Recherchenort | Abschlußdatum der Recherche | Prüfer |
|---|---|---|
| BERLIN | 23. Mai 2001 | Taylor, P |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 01 10 1906

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

23-05-2001

| Im Recherchenbericht angeführtes Patentdokument | | Datum der Veröffentlichung | Mitglied(er) der Patentfamilie | | Datum der Veröffentlichung |
|---|---|---|---|---|---|
| WO 0000835 | A | 06-01-2000 | CN | 1277675 T | 20-12-2000 |
| | | | EP | 1032842 A | 06-09-2000 |
| | | | US | 6222712 B | 24-04-2001 |
| US 5636109 | A | 03-06-1997 | KEINE | | |
| DE 4017415 | A | 14-02-1991 | JP | 2587710 B | 05-03-1997 |
| | | | JP | 4012495 A | 17-01-1992 |
| | | | JP | 3008299 A | 16-01-1991 |
| | | | DE | 4109325 A | 06-02-1992 |
| | | | DE | 4143464 C | 21-12-1995 |
| | | | FR | 2648000 A | 07-12-1990 |
| | | | FR | 2661588 A | 31-10-1991 |
| | | | GB | 2233796 A,B | 16-01-1991 |
| | | | GB | 2243503 A,B | 30-10-1991 |
| | | | US | 5140229 A | 18-08-1992 |
| | | | US | 5142203 A | 25-08-1992 |
| US 5959439 | A | 28-09-1999 | WO | 9853378 A | 26-11-1998 |
| US 5355077 | A | 11-10-1994 | KEINE | | |

EPO FORM P0461

Für nähere Einzelheiten zu diesem Anhang : siehe Amtsblatt des Europäischen Patentamts, Nr.12/82